# EUROPEAN PATENT SPECIFICATION

(11) **EP 1 490 676 B1**
(45) Date of publication and mention of the grant of the patent: **07.05.2008**
(21) Application number: 02776920.7
(22) Date of filing: 05.08.2002
(51) Int. Cl.: G01N 30/06

(54) **ANALYZER FOR AUTOMATIC RAPID ANALYSIS OF THE ACETADEHYDE CONTENT OF PET PRODUCTS, PARTICULARLY PREFORMS, AND ITS OPERATIVE PROCESS**
ANALYSATOR ZUR AUTOMATISIERTEN SCHNELLEN ANALYSE DES ACETALDEHYDGEHALTES VON PET-PRODUKTEN, INSBESONDERE VORFORMEN, UND DER ZUGEHÖRIGE OPERATIVE PROZESS
ANALYSEUR SERVANT A L'ANALYSE AUTOMATIQUE ET RAPIDE DE LA TENEUR EN ACETALDEHYDES D'ARTICLES EN PET, EN PARTICULIER DE PREFORMES, ET SON PROCEDE DE FONCTIONNEMENT

(30) Priority: 29.03.2002 IT BG20020011
(43) Date of publication of application: 29.12.2004
(73) Proprietor: Marabini, Silvia, 24050 Grassobbio (IT)
(72) Inventor: MARABINI, Silvia, I-24050 Grassobbio (IT); SONZOGNI, Sergio, I-24050 Grassobbio (IT); AMICABILE, Maurizio, I-20020 Arese (IT); AMICABILE, Silvio, I-20057 Vedano al Lambro (IT)
(74) Representative: Gatti, Enrico
(86) International application number: PCT/EP2002/008698
(87) International publication number: WO 2003/083468

(56) References cited:
- WO-A-01/02489
- KHEMANI K C: "A novel approach for studying the thermal degradation, and for estimating the rate of acetaldehyde generation by the chain scission mechanism in ethylene glycol based polyesters and copolyesters" POLYMER DEGRADATION AND STABILITY, BARKING, GB, vol. 67, no. 1, January 2000 (2000-01), pages 91-99, XP004294838 ISSN: 0141-3910
- LINSSEN J ET AL.: "static headspace-gas chromatography of acetaldehyde in aqueous food s and polythene terephthalate" ZEITSCHRIFT FÜR LEBENSMITTELUNTERSUCHUNG UND FORSCHUNG, vol. 201, no. 3, 1995, pages 253-255, XP008022291 ISSN 0044-3026

## Description

This invention relates to an analyzer for automatic rapid analysis of the acetaldehyde content of polyethylene terephthalate (PET) products, particularly preforms, and to its operative process.

The determination of the acetaldehyde (AA) content of polyethylene terephthalate (PET) preforms, as an index of PET degradation, is a known current test used as a parameter in verifying good product quality. The current analytical approach comprises sample preparation by cryogenic grinding of the preform and gas chromatographic analysis by the headspace technique.

To obtain significant data the instrumentation must be calibrated using a reliable precise standard solution. To achieve this the standard acetaldehyde solution must be distilled, the distillate titrated and a series of reference samples of different concentration prepared for use in constructing an external calibration graph.

In this respect, data demonstrating good repeatability within the laboratory of origin are very often not reproducible between one laboratory and another. The treatment and handling of the preform sample to be analyzed (manipulation, cutting etc.) in such a manner as to make analysis possible with existing laboratory systems plays a determining role with regard to the accuracy and reproducibility of the result.

Moreover the technical costs and times involved in carrying out the test are such as to enable only a sporadic process check, considering the number of preforms produced in a normal productive plant. Generally from 1 to about 5 measurements per day are made in checking an average hourly production of about 15,000 preforms per injection moulding press.

In the prior art, acetaldehyde is determined in a chemical laboratory using an analytical system generally composed of a static headspace sampler, in combination with a gas chromatograph. The sample must be previously ground cryogenically, sifted and weighed, and moreover the preparation of the reference acetaldehyde solution requires laboratory personnel and methods (titrations, preparation of reference solutions, etc.). During production, preforms are withdrawn and sent to the laboratory. The result of the analysis is received after a time not compatible with production times.

The lack of a quick analysis result often results in the scrapping of large quantities of product.

The article of K. C. Khemani, with the title "A novel approach for studying the thermal degradation, and for estimating the rate of acetaldehyde generation by the chain scission mechanism in ethylene glycol based polyesters and co-polyesters", in Polymer Degradation and Stability, January 2000, describes a system for studying the mechanism of PET degradation by means of gas-chromatographic analyses at 280°C. The system comprises an aluminium boat in an oven, a gas chromatograph, a cold trap and a detector.

An object of the present invention is to increase the monitoring of the PET preform production process by reducing analysis times and costs.

Another object is to create a system able to carry out an AA test in a short time, for example less than thirty minutes and, in particular, to enable it to be performed in proximity to or within the actual production plant, without having to use specialized laboratories and methods.

Another object of the present invention is to eliminate the aforesaid drawbacks and limitations.

Another object is to define an analyzer able to be used directly in PET article production departments by being able to operate even on granules of said material.

These and further objects are attained by a method and analyzer for the automatic rapid analysis of the acetaldehyde content of PET preforms or granules having the characteristics defined in the accompanying claims.

The invention is illustrated by way of non-limiting example in the accompanying drawings, in which:
Figure 1 is a ;perspective schematic view of an example of the outer structure of the analyzer;
Figure 2 is a general operating scheme of the analyzer;
Figure 3 is a section through one embodiment of a desorption cell suitable for use both with preform samples and with PET in other states.

Particular reference will be made hereinafter to preferred embodiments of the invention in which these samples are PET preforms, however this is in no way meant to be limitative as the invention can also be used for analysis of the raw material (granules) or of articles produced from the preform (bottles).

In the method on which the present invention is based, the calibration is carried out by the analyzer by using a cylinder of certified gas (nitrogen/acetaldehyde mixture of known concentration) and/or of an aqueous acetaldehyde solution to be injected into the measurement cell (described hereinafter), then when the analyzer has been calibrated the analysis is carried out without the preform undergoing any preparation. In the case of PET preform production, the said method, according to the invention, can be also used within the product preparation department by virtue of the dimensional compactness of the analyzer structure and of the lack of requirement for qualified personnel, the usual production plant personnel being sufficient. This advantageously enables the product to be monitored in-line.

This signifies the ability to make at least one evaluation of the AA content per box containing from 7500 to 15000 pieces provided by the producer to the preform-bottle transformer, and that, considering the average filling time is about 30-60 minutes, a wide margin of action is achieved for the injection moulding press, enabling the process to be controlled, if necessary, by taking action as soon as the values indicate an increase in material degradation. It must also be considered that these plants operate under continuous cycle.

The aim is therefore to increase the number of checks, and hence the process quality, by reducing analytical costs.

The invention will now be described with reference to the accompanying drawings which illustrate preferred but non-limiting embodiments thereof.

All the figures use the same reference numerals to indicate identical or substantially_corresponding parts.

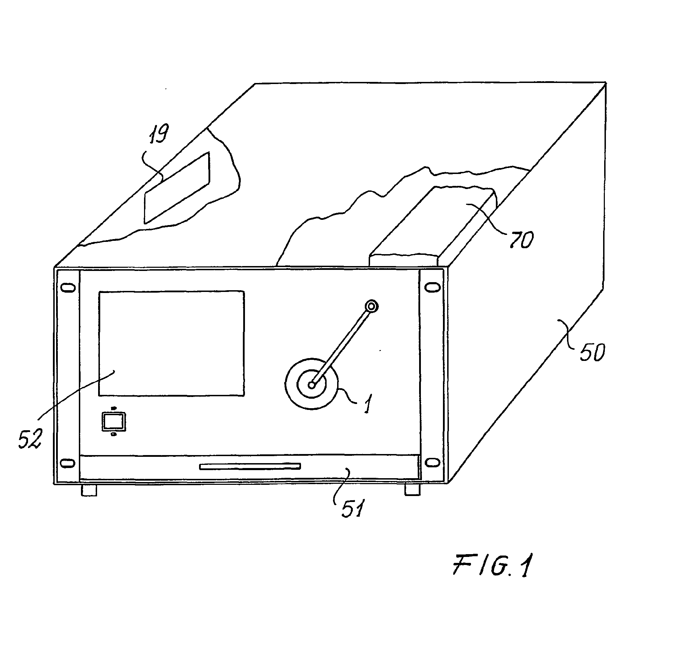

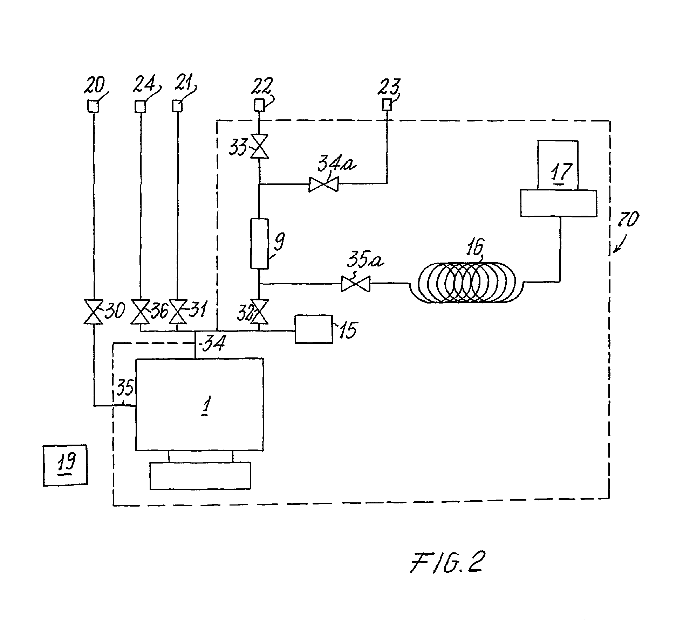

With reference to Figures 1 and 2, the operative process of the invention is preferably implemented by means of a single apparatus housed in a container 50 containing: a temperature-controlled analysis chamber 70 housing valves, a separation column 16, a detection system 17, a sampling loop 9, and an extraction or desorption cell 1. A monitor or graphic display 52 is mounted on the front panel. A keypad 51 for command and data insertion is connected to the apparatus, plus a printer (not shown) for providing a paper copy of the analysis result. A data processing system is also housed in the container 50.

The scheme of Figure 2 shows the system components and operation in greater detail. This system comprises the acetaldehyde desorption or extraction cell in which the preform is placed. The cell can be connected to a known gas chromatography column 16 able to separate the acetaldehyde present in the sample to the analyzed (preform). The column 16 is connected to a conventional detection system (flame ionization type) and to a known sampling loop which serves to contain a constant volume of gaseous sample.

The following operative steps are involved:
step 1 (scavening the desorption cell 1 with air): with the valves 32 and 36 closed, the valves 30 and 31 are opened to allow air at constant pressure (for example 1.5 bar or less) supplied by a cylinder to enter at 21, this air flowing into the cell 1 to then leave at 20. The sample (for example a preform) has been previously placed in the cell;
step 2 (sample incubation and heating): with the valves 30, 31, 32 and 36 closed the sample is maintained in a closed air atmosphere for a predetermined time (established experimentally) at a high temperature, for example about 140°C, for example for 30 minutes if a 150 ml cell is used;
step 3 (pressurization): with the valves 30, 32 and 36 closed the valve 31 is opened to create a pressure (for example about 1.5 bar) within the cell 1 as measured by the device 15 (pressure sensor);
step 4 (loop charging): with the valves 30, 31, 34a, 35a and 36 closed, the valves 32 and 33 are opened to depressurize the cell 1, with charging of the loop 9;
step 5 (analysis): with the valves 32 and 33 closed the valves 34a and 35a are opened to enable transport gas 23 (hydrogen supplied by a pressurized source, for example a cylinder) to flow through the valve 34a and convey the content of the loop 9 through the valve 35a, so that it reaches the column 16 and then the detector 17.

The various cycle steps, the valve switchings and the other operations (such as integrations, chromatogram display, data memorization, etc.) are controlled by the unit 19, preferably consisting of a PC within the analyzer.

The valves 32, 33, 34a and 35a represent "automatic small-volume sampling valves" (known per se) able to sample a few microlitres of sample directly into the gas chromatography column without using special sample splitting techniques, hence eliminating the analysis errors inherent in this technique.

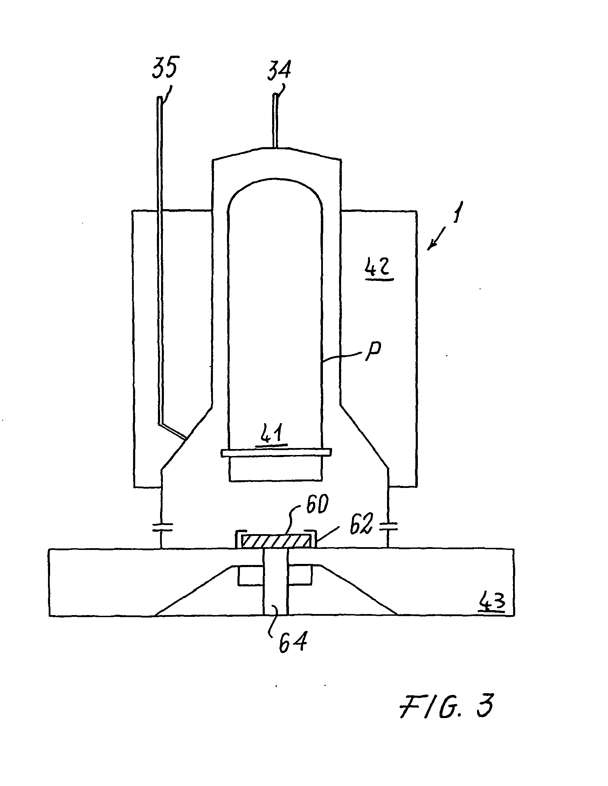

With reference to Figure 3, the desorption cell 1 is formed from a space 41, for example of substantially cylindrical shape, surrounded by an electrically heated and suitably insulated sleeve 42, and from a removable hermetic-sealing ring nut 43 which when removed enables the preform P to be inserted. A conduit 35, connected to the valve 30 of the scavenging connector 20, opens into the forward part of the cell, a conduit 34 being provided at the inner end of the cell.

The cell 1 can receive preform samples of different lengths and widths. After inserting a preform into the cell, the closure ring nut 33 ensures that the extraction system is hermetically sealed.

The ring nut 43 (formed from several components) comprises a seat 62 which receives and retains a perforable baffle 60 through which an aqueous acetaldehyde solution can be injected into the cell. Holes 64 are provided in the ring nut for the injection needle.

The analysis cycle of the system according to the invention takes place in the following manner. A calibration cycle is periodically carried out in which an aqueous solution of known acetaldehyde concentration is injected into the desorption cell 1 through the perforable baffle 60 with a syringe. The calibration can also be carried out with a standard reference gas by connecting to the connector 24 a cylinder containing nitrogen with a known concentration of acetaldehyde. The operator inserts the sample into the cell 1 and starts the analysis system, which progresses in accordance with the aforestated steps (scavenging, incubation and heating, pressurization, loop charging, analysis). During this cycle the partial pressure is monitored by the device 15. The partial pressure is proportional to the quantity of water and acetaldehyde which is desorbed. Partial pressure monitoring enables the analysis results to be successively corroborated by verifying that the partial pressure always remains below the pressure value set for the sample pressurization cycle. If this value is exceeded a warning signal or message is given. On termination of the analysis cycle the separation of the different components, the graphic printout and the analysis schedule are obtained. The graph consists of a chromatogram in which the peak areas are proportional to the concentration of the extracted compounds, including acetaldehyde. The final result is calculated on the basis of the calibration and is corrected (multiplied) by a factor representing the ratio of empty cell volume to its net volume when the preform is inserted. On termination of the analysis cycle the system returns to its stand-by state.

Although the invention has been illustrated with reference to preferred embodiments, it is generally susceptible to other applications and modifications, which lie within the scope of protection as will be apparent to the expert of the art. Advantageously, the invention as defined does not require the use of qualified personnel. It also eliminates the time involved in the handling and preparation work on the samples to be analyzed. It also enables results to be obtained which are comparable with those obtainable in the laboratory by known procedures, but achieved with considerably shorter analysis times and with more reliable results, as they are less subject to human error.

The signals from the detector 17 are processed in known manner to obtain the chromatogram and to compare the measured acetaldehyde content with a predetermined value which, if exceeded, visually and/or acoustically warns the responsible personnel of the unsuitability of the preform batch.

The term "PET sample" used in the following claims includes not only a whole preform, but also PET granules or pieces.

## Claims

1. A method for extracting acetaldehyde and determining its content, particularly in PET samples in the form either of a whole preform or of PET pieces or granules, comprising:
locating the PET sample in a desorption cell (1), scavenging said desorption cell (1) with air, incubating and heating the PET sample placed in the cell (1), pressurizing the cell (1) , charging a loop (9), and
transferring the loop (9) content to a gas chromatography column (16) and from there to a detector (17).

2. A method as claimed in the preceding claims, wherein the loop (9) content is transferred by a transport gas such as hydrogen.

3. A method as claimed in the preceding claims, wherein the gas chromatography column (16) is optimized for acetaldehyde separation.

4. A method as claimed in the preceding claims, wherein after an analysis, cell scavenging with air automatically commences after removing the PET sample.

5. An analyzer for extracting acetaldehyde and automatically determining its content, particularly in PET samples, comprising, in combination:
- a desorption cell (1) into which said sample is inserted; means for scavenging said desorption cell (1) with air. Means for incubating and heating the pet sample placed in the cell (1); means for pressurizing the cell (1) ;
- an analyzer system comprising a separation column (16) optimized for acetaldehyde separation;
- a loop (9) connectable to said cell (1) to receive an aeriform acetaldehyde sample, which is then transmitted to the optimized separation column (16) and then to a detector (17), a complex of controlled valve_means being included for manipulating the fluids flowing within the analyzer.

6. An analyzer as claimed in claim 5, wherein the complex of valve means is controlled in accordance with a program by a data processing and control system (19).

7. An analyzer as claimed in claims 5 and 6, wherein means (19) are provided for measuring the partial pressure during the desorption step.

8. An analyzer as claimed in the preceding claim, wherein the cell (1) is provided with a perforable baffle (60) for the injection thereinto of a mixture of known acetaldehyde concentration, for calibration purposes.

9. An analyzer as claimed in claim 7, wherein for calibration purposes the cell (1) can be connected (at 24) to a cylinder or similar source supplying a nitrogen/acetaldehyde mixture of known acetaldehyde concentration.

10. An analyzer as claimed in claim 5, wherein the cell (1) is provided with electrical controlled heating means.

## Patentansprüche

1. Verfahren zum Extrahieren von Acetaldehyd und zum Bestimmen des Gehalts daran, insbesondere in PET-Proben entweder in Form von vollständigen Vorformen oder von PET-Stücken oder Körnern, wobei bei dem Verfahren: Die PET-Probe in einer Desorptionskammer (1) platziert wird, die Desorptionskammer (1) mit Luft gespült wird, die in der Kammer (1) platzierte PET-Probe inkubiert und erwärmt wird, die Kammer (1) unter Druck gesetzt wird, ein Kreislauf (9) beschickt wird und der Inhalt des Kreislaufs (9) einer Gaschromatographiesäule (16) zugeführt und von dort zu einem Detektor (17) weitergeleitet wird.

2. Verfahren nach dem vorhergehenden Anspruch, wobei der Inhalt des Kreislaufs (9) durch ein Transportgas wie etwa Wasserstoff weitergeleitet wird.

3. Verfahren nach den vorhergehenden Ansprüchen, wobei die Gaschromatographiesäule (16) für die Acetaldehydseparation optimiert ist.

4. Verfahren nach den vorhergehenden Ansprüchen, wobei nach einer Analyse, nachdem die PET-Probe entfernt ist die Spülung der Kammer mit Luft automatisch beginnt.

5. Analysator zum Extrahieren von Acetaldehyd und zum automatischen Bestimmen des Acetaldehydgehalts, insbesondere in PET-Proben, wobei der Analysator in Kombination aufweist:
Eine Desorptionskammer (1), in die die Probe eingeführt wird; Einrichtungen zum Spülen der Desorptionskammer (1) mit Luft; Einrichtungen zum Inkubieren und Erwärmen der PET-Probe, die in der Kammer (1) platziert ist; Einrichtungen zum Unterdrucksetzen der Kammer (1);
ein Analysatorsystem, das eine Separationssäule (16) umfasst, die für die Acetaldehydseparation optimiert ist;
einen mit der Kammer (1) verbindbaren Kreislauf (9) zur Aufnahme einer gasförmigen Acetaldehydprobe, die dann zu der optimierten Separationssäule (16) und dann zu einem Detektor (17) weitergeleitet wird, wobei ein Komplex von gesteuerten Ventileinrichtungen zum Steuern der in dem Analysator fließenden Fluide enthalten ist.

6. Analysator nach Anspruch 5, wobei der Komplex von Ventileinrichtungen durch ein Datenprozessier- und Steuersystem (19) nach Maßgabe eines Programms gesteuert wird.

7. Analysator nach Ansprüchen 5 und 6, wobei Einrichtungen (19) zum Messen des Partialdruckes während des Desorptionsschrittes vorgesehen sind.

8. Analysator nach dem vorhergehenden Anspruch, wobei die Kammer (1) mit einer durchstechbaren Trennwand (60) versehen ist, um ein Gemisch mit bekannter Acetaldehydkonzentration zu Kalibrationszwecken dort hinein injizieren zu können.

9. Analysator nach Anspruch 7, wobei die Kammer (1) zu Kalibrationszwecken mit einem Zylinder oder einer ähnlichen Quelle verbunden werden kann (bei 24), die ein Stickstoff/Acetaldehydgemisch mit bekannter Acetaldehydkonzentration zuführt.

10. Analysator nach Anspruch 5, wobei die Kammer (1) mit einer elektrisch gesteuerten Heizeinrichtung versehen ist.

## Revendications

1. Procédé permettant d'extraire de l'acétaldéhyde et de déterminer sa teneur, en particulier dans des échantillons de PET sous la forme soit d'un préformé entier soit de pièces ou de granulés de PET, comprenant :
le positionnement de l'échantillon de PET dans une cellule de désorption (1), le balayage de ladite cellule de désorption (1) avec de l'air, l'incubation et le chauffage de l'échantillon de PET placé dans la cellule (1), la pressurisation de la cellule (1), le chargement d'une boucle (9), et le transfert du contenu de la boucle (9) dans une colonne pour chromatographie en phase gazeuse (16) puis vers un détecteur (17).

2. Procédé selon la revendication précédente, dans lequel le contenu de la boucle (9) est transféré par un gaz de transport tel que l'hydrogène.

3. Procédé selon les revendications précédentes, dans lequel la colonne pour chromatographie en phase gazeuse (16) est optimisée pour la séparation de l'acétaldéhyde.

4. Procédé selon les revendications précédentes, dans lequel après une analyse, le balayage de la cellule avec de l'air commence automatiquement après le retrait de l'échantillon de PET.

5. Analyseur permettant d'extraire de l'acétaldéhyde et de déterminer automatiquement sa teneur, en particulier dans les échantillons de PET, comprenant en combinaison :
- une cellule de désorption (1) dans laquelle est inséré ledit échantillon ; des moyens pour balayer ladite cellule de désorption (1) avec de l'air ; des moyens pour incuber et pour chauffer l'échantillon de PET placé dans la cellule (1) ; des moyens pour pressuriser la cellule (1) ;
- un système d'analyseur comprenant une colonne de séparation (16) optimisée pour la séparation de l'acétaldéhyde ;
- une boucle (9) pouvant être reliée à ladite cellule (1) pour recevoir un échantillon d'acétaldéhyde aériforme, qui est ensuite transmis à la colonne de séparation optimisée (16) puis à un détecteur (17), un ensemble de moyens de soupapes à commande étant compris pour manipuler les fluides s'écoulant à l'intérieur de l'analyseur.

6. Analyseur selon la revendication 5, dans lequel l'ensemble de moyens de soupapes est commandé selon un programme par un système de traitement des données et de commande (19).

7. Analyseur selon les revendications 5 et 6, dans lequel des moyens (19) sont fournis pour mesurer la pression partielle pendant l'étape de désorption.

8. Analyseur selon la revendication précédente, dans lequel la cellule (1) est fournie avec un écran pouvant être perforé (60) pour pouvoir y injecter un mélange d'une teneur en acétaldéhyde connue, à des fins de calibrage.

9. Analyseur selon la revendication 7, dans lequel, à des fins de calibrage, la cellule (1) peut être reliée (en 24) à un cylindre ou à une source similaire fournissant un mélange d'azote et d'acétaldéhyde ayant une teneur en acétaldéhyde connue.

10. Analyseur selon la revendication 5, dans lequel la cellule (1) est dotée moyens de chauffage commandé électrique.
